# EUROPEAN PATENT APPLICATION

(11) **EP 4 818 634 A1**
(43) Date of publication of application: **07.10.2026**
(21) Application number: 24895538.7
(22) Date of filing: 11.06.2024
(51) Int. Cl.: G01B 11/00, G01B 11/25, G06T 7/00

(54) **COATING SYSTEM AND CALIBRATION METHOD THEREOF**

(30) Priority: 01.12.2023 CN 202311646481
(71) Applicant: Contemporary Amperex Technology Co., Limited, Ningde, Fujian 352100 (CN)
(72) Inventor: WU, Chunxu, Ningde, Fujian 352100 (CN); JIANG, Ping, Ningde, Fujian 352100 (CN); ZHANG, Zhipeng, Ningde, Fujian 352100 (CN); LI, Hongyuan, Ningde, Fujian 352100 (CN)
(74) Representative: Gong, Jinping
(86) International application number: PCT/CN2024/098475
(87) International publication number: WO 2025/112432

(57) **Abstract**

A coating system and a calibration method thereof. The coating system comprises: a roller (110), a line scan camera (120), an encoder (130), a controller (150), and a calibration ruler. The roller (110) comprises a first roller (111) and a second roller (112). The calibration ruler is disposed on the roller (110) and comprises a plurality of staggered calibration blocks. The encoder (130) is mounted coaxially with the roller (110) or is in contact with the roller (110) by means of press-wheel mounting, and generates a first trigger signal; one or more line scan cameras (120) are disposed on one side of the roller (110), and the imaging field of view of the camera corresponds to the calibration ruler. Upon receipt of the first trigger signal or under the trigger of a second trigger signal in the line scan camera (120), the line scan camera (120) photographs the calibration ruler to acquire an image. The controller (150) computes at least one of a lateral accuracy and a longitudinal accuracy of the line scan camera (120) on the basis of the image. The system improves the precision and accuracy of camera calibration.

## Description

### CROSS-REFERENCE TO RELATED APPLICATION

The present application claims priority to Chinese Patent Application No. 202311646481.9 filed on December 01, 2023, and entitled "COATING SYSTEM AND CALIBRATION METHOD THEREOF", the content of which is incorporated herein by reference in its entirety.

### TECHNICAL FIELD

The present application relates to the technical field of quality inspection of battery electrode plates, and in particular, to a coating system and a calibration method thereof.

### BACKGROUND

In a wide-width coating visual inspection system, the surface A and the surface B of the electrode plate need to be inspected. When the surface A of the electrode plate is inspected, due to the large width of the electrode plate and the high requirements for inspection accuracy, dual cameras are required to capture images, and the captured images are stitched together before inspection. The same applies to the inspection of the surface B of the electrode plate. In the process of image measurement and machine vision applications, camera calibration is required to determine the relationship between the three-dimensional geometric position of a point on the surface of a spatial object and the corresponding point thereof in the image. In the related art, the debugging of cameras and the camera calibration have the problem of poor accuracy, which affects the overall acceptance progress of the device.

### SUMMARY

A technical problem addressed in the present application is that: in the related art, the calibration accuracy of a camera in a coating system is relatively poor.

According to one aspect of the present application, a coating system is provided. The coating system includes: a first roller and a second roller; a calibration ruler, disposed on the first roller or the second roller and including a plurality of calibration blocks arranged in a staggered manner; an encoder, coaxially mounted with the first roller or the second roller, or mounted on a support and in contact with the first roller or the second roller by means of press-wheel mounting, and configured to generate a first trigger signal when driven by the first roller or the second roller; one or a plurality of line scan cameras, disposed on one side of the first roller or the second roller, where an imaging field of view of the one or plurality of line scan cameras corresponds to the calibration ruler, and the line scan camera is configured to photograph the calibration ruler to acquire an image after receiving the first trigger signal or upon being triggered by a second trigger signal generated inside the line scan camera; and a controller, configured to compute at least one of a lateral accuracy and a longitudinal accuracy of the line scan camera based on the image.

In the technical solution of the embodiments of the present application, the calibration ruler is disposed on the roller, the encoder generates the first trigger signal when driven by the roller, the imaging field of view of the line scan camera corresponds to the calibration ruler, the line scan camera photographs the calibration ruler to acquire an image upon being triggered by the first trigger signal or the second trigger signal, and the controller computes at least one of the lateral accuracy and the longitudinal accuracy based on the image, such that the calibration accuracy of the camera of the coating system is improved.

In some embodiments, the coating system further includes: an acquisition card, electrically connected to the encoder, electrically connected to the one or plurality of line scan cameras, and configured to receive the first trigger signal from the encoder, transmit the first trigger signal to the one or plurality of line scan cameras, receive the image captured by the one or plurality of line scan cameras, and transmit the image to the controller. In the embodiments, the acquisition of images is conveniently achieved through the acquisition card.

In some embodiments, the calibration ruler includes: a plurality of first calibration blocks spaced apart from each other in a first row and a plurality of second calibration blocks spaced apart from each other in a second row, where the plurality of first calibration blocks and the plurality of second calibration blocks are arranged in a staggered manner, and a first portion of each of the plurality of first calibration blocks and a second portion of each of the plurality of second calibration blocks are arranged on a same straight line; the calibration ruler is attached to the first roller along a positioning line on the first roller, or attached to the second roller along a positioning line on the second roller, and the line scan camera photographs the calibration ruler upon being triggered by the second trigger signal to acquire a first image, and photographs the calibration ruler after receiving the first trigger signal to acquire a second image. In the embodiments, by providing two rows of calibration blocks arranged in a staggered manner, the camera can conveniently acquire corresponding images, so as to achieve the calibration of the camera accuracy.

In some embodiments, the calibration ruler further includes: a third calibration block, located in a row different from the first row and the second row. In the embodiments, by providing the third calibration block, it is convenient to determine the overlapping field of view of the two cameras based on the third calibration block.

In some embodiments, the third calibration block is aligned with one second calibration block of the plurality of second calibration blocks in a direction perpendicular to an extension direction of the second row. In the embodiments, by aligning the third calibration block with one second calibration block, it is convenient to determine the overlapping field of view of the two cameras based on the third calibration block.

In some embodiments, the controller is configured to compute the lateral accuracy based on the first image in the case that the one or plurality of line scan cameras capture the first image upon being triggered by the second trigger signal, where the first image includes the first portion and the second portion alternately arranged on the same straight line. In the embodiments, by means of the internal trigger of the camera, the first image is acquired, thereby facilitating the calculation of the lateral calibration accuracy of the camera.

In some embodiments, the controller is configured to compute the longitudinal accuracy based on the second image in the case that the one or plurality of line scan cameras capture the second image after receiving the first trigger signal, where the second image includes the plurality of first calibration blocks and the plurality of second calibration blocks. In the embodiments, the line scan camera is triggered by the encoder to acquire the second image, thereby facilitating the calculation of the longitudinal calibration accuracy of the camera.

In some embodiments, the one or plurality of line scan cameras include a plurality of line scan cameras, where the plurality of line scan cameras are arranged side by side, imaging points of the plurality of line scan cameras are collinear, and an imaging field of view of each of the plurality of line scan cameras corresponds to a portion of the calibration ruler; the controller is configured to determine overlapping fields of view of the plurality of line scan cameras in the case that each of the plurality of line scan cameras captures an image including the third calibration block. In the embodiments, the overlapping fields of view of the plurality of line scan cameras are determined, thereby facilitating the removal of the overlapping fields of view in the accuracy calibration process and thus improving the calibration accuracy of the camera.

In some embodiments, each of the plurality of line scan cameras is configured to capture the first image upon being triggered by the second trigger signal, such that the plurality of line scan cameras acquire a plurality of first images; and the controller is configured to remove overlapping portions of the plurality of first images based on the overlapping fields of view of the plurality of line scan cameras, stitch the plurality of first images from which the overlapping portions are removed into a third image, and compute the lateral accuracy based on the third image. In the embodiments, by removing the overlapping portions of the plurality of first images to stitch the plurality of first images into the third image, the lateral accuracy of the camera is calculated based on the third image, thereby improving the lateral calibration accuracy of the camera.

In some embodiments, the controller is configured to compute, based on a lateral length of a region between two adjacent edges in the first portion and the second portion alternately arranged on the same straight line and lateral pixel positions of the two adjacent edges, a lateral accuracy corresponding to the region between the two adjacent edges. In this way, the calculation of the lateral accuracy of the camera is achieved, and the lateral calibration accuracy of the camera is improved.

In some embodiments, each of the plurality of line scan cameras is configured to capture the second image after receiving the first trigger signal, such that the plurality of line scan cameras acquire a plurality of second images; and the controller is configured to remove overlapping portions of the plurality of second images based on the overlapping fields of view of the plurality of line scan cameras, stitch the plurality of second images from which the overlapping portions are removed into a fourth image, and compute the longitudinal accuracy based on the fourth image. In the embodiments, by removing the overlapping portions of the plurality of second images to stitch the plurality of second images into the fourth image, the longitudinal accuracy is calculated based on the fourth image, thereby improving the longitudinal calibration accuracy of the camera.

In some embodiments, the controller is configured to compute, based on a longitudinal length of the first calibration block or the second calibration block between two edges in the first portion and the second portion alternately arranged on the same straight line, and a longitudinal pixel position of a lower edge and a longitudinal pixel position of an upper edge of the first calibration block or the second calibration block between the two edges, a longitudinal accuracy corresponding to a region between the two edges. In this way, the calculation of the longitudinal accuracy of the camera is achieved, and the longitudinal calibration accuracy of the camera is improved.

According to another aspect of the present application, a calibration method for a coating system is provided. The coating system includes: a first roller and a second roller; a calibration ruler, disposed on the first roller or the second roller and including a plurality of calibration blocks arranged in a staggered manner; an encoder, coaxially mounted with the first roller or the second roller, or mounted on a support and in contact with the first roller or the second roller by means of press-wheel mounting; one or a plurality of line scan cameras, disposed on one side of the first roller or the second roller, where an imaging field of view of the one or plurality of line scan cameras corresponds to the calibration ruler; and a controller. The calibration method includes: generating, by the encoder, a first trigger signal when driven by the first roller or the second roller; photographing, by the line scan camera, the calibration ruler to acquire an image after receiving the first trigger signal or upon being triggered by a second trigger signal generated inside the line scan camera; and computing, by the controller, at least one of a lateral accuracy and a longitudinal accuracy of the line scan camera based on the image.

In the technical solution of the embodiments of the present application, the encoder generates the first trigger signal when driven by the roller, the line scan camera photographs the calibration ruler to acquire an image upon being triggered by the first trigger signal or the second trigger signal, and the controller calculates at least one of the lateral accuracy and the longitudinal accuracy based on the image, such that the calibration accuracy of the camera of the coating system is improved.

In some embodiments, the calibration ruler includes: a plurality of first calibration blocks spaced apart from each other in a first row and a plurality of second calibration blocks spaced apart from each other in a second row, where the plurality of first calibration blocks and the plurality of second calibration blocks are arranged in a staggered manner, and a first portion of each of the plurality of first calibration blocks and a second portion of each of the plurality of second calibration blocks are arranged on a same straight line; the calibration ruler is attached to the first roller along a positioning line on the first roller, or attached to the second roller along a positioning line on the second roller. Photographing, by the line scan camera, the calibration ruler to acquire the image after receiving the first trigger signal or upon being triggered by the second trigger signal generated inside the line scan camera, includes: photographing, by the line scan camera, the calibration ruler to acquire a first image upon being triggered by the second trigger signal; and computing, by the controller, at least one of the lateral accuracy and the longitudinal accuracy of the line scan camera based on the image, includes: computing, by the controller, the lateral accuracy based on the first image in the case that the one or plurality of line scan cameras capture the first image upon being triggered by the second trigger signal, where the first image includes the first portion and the second portion alternately arranged on the same straight line. In the embodiments, by means of the internal trigger of the camera, the first image is acquired, thereby facilitating the calculation of the lateral calibration accuracy of the camera.

In some embodiments, photographing, by the line scan camera, the calibration ruler to acquire the image after receiving the first trigger signal or upon being triggered by the second trigger signal generated inside the line scan camera, includes: photographing, by the line scan camera, the calibration ruler to acquire the second image after receiving the first trigger signal; and computing, by the controller, at least one of the lateral accuracy and the longitudinal accuracy of the line scan camera based on the image, includes: computing, by the controller, the longitudinal accuracy based on the second image in the case that the one or plurality of line scan cameras capture the second image after receiving the first trigger signal, where the second image includes the plurality of first calibration blocks and the plurality of second calibration blocks. In the embodiments, the line scan camera is triggered by the encoder to acquire the second image, thereby facilitating the calculation of the longitudinal calibration accuracy of the camera.

In some embodiments, the calibration ruler further includes: a third calibration block located in a row different from the first row and the second row; the one or plurality of line scan cameras include a plurality of line scan cameras, where the plurality of line scan cameras are arranged side by side, imaging points of the plurality of line scan cameras are collinear, and an imaging field of view of each of the plurality of line scan cameras corresponds to a portion of the calibration ruler. The calibration method further includes: determining, by the controller, overlapping fields of view of the plurality of line scan cameras in the case that each of the plurality of line scan cameras captures an image including the third calibration block. In the embodiments, the overlapping fields of view of the plurality of line scan cameras are determined, thereby facilitating the removal of the overlapping fields of view in the accuracy calibration process and thus improving the calibration accuracy of the camera.

In some embodiments, photographing, by the line scan camera, the calibration ruler to acquire the first image upon being triggered by the second trigger signal, includes: capturing, by each of the plurality of line scan cameras, the first image upon being triggered by the trigger of the second trigger signal, such that the plurality of line scan cameras acquire a plurality of first images; and computing, by the controller, the lateral accuracy based on the first image in the case that the one or plurality of line scan cameras capture the first image upon being triggered by the second trigger signal, includes: removing, by the controller, overlapping portions of the plurality of first images based on the overlapping fields of view of the plurality of line scan cameras, stitching the plurality of first images from which the overlapping portions are removed into a third image, and computing the lateral accuracy based on the third image. In the embodiments, by removing the overlapping portions of the plurality of first images to stitch the plurality of first images into the third image, the lateral accuracy of the camera is calculated based on the third image, thereby improving the lateral calibration accuracy of the camera.

In some embodiments, computing, by the controller, the lateral accuracy based on the third image includes: computing, by the controller, based on a lateral length of a region between two adjacent edges in the first portion and the second portion alternately arranged on the same straight line and lateral pixel positions of the two adjacent edges, a lateral accuracy corresponding to the region between the two adjacent edges. In this way, the calculation of the lateral accuracy of the camera is achieved, and the lateral calibration accuracy of the camera is improved.

In some embodiments, photographing, by the line scan camera, the calibration ruler to acquire the second image after receiving the first trigger signal, includes: capturing, by each of the plurality of line scan cameras, the second image after receiving the first trigger signal, such that the plurality of line scan cameras obtain a plurality of second images; and computing, by the controller, the longitudinal accuracy based on the second image in the case that the one or plurality of line scan cameras capture the second image after receiving the first trigger signal, includes: removing, by the controller, overlapping portions of the plurality of second images based on the overlapping fields of view of the plurality of line scan cameras, stitching the plurality of second images from which the overlapping portions are removed into a fourth image, and computing the longitudinal accuracy based on the fourth image. In the embodiments, by removing the overlapping portions of the plurality of second images to stitch the plurality of second images into the fourth image, the longitudinal accuracy is calculated based on the fourth image, thereby improving the longitudinal calibration accuracy of the camera.

In some embodiments, computing, by the controller, the longitudinal accuracy based on the fourth image includes: computing, by the controller, based on a longitudinal length of the first calibration block or the second calibration block between two edges in the first portion and the second portion alternately arranged on the same straight line, and a longitudinal pixel position of a lower edge and a longitudinal pixel position of an upper edge of the first calibration block or the second calibration block between the two edges, a longitudinal accuracy corresponding to a region between the two edges. In this way, the calculation of the longitudinal accuracy of the camera is achieved, and the longitudinal calibration accuracy of the camera is improved.

### BRIEF DESCRIPTION OF THE DRAWINGS

To more clearly illustrate the technical solutions according to embodiments of the present application, the drawings required for illustrating the embodiments of the present application are briefly described below. Apparently, the drawings in the following description illustrate merely some embodiments of the present application, and those of ordinary skill in the art may still derive other drawings from these drawings without creative efforts.
FIG. 1 is a schematic structural diagram illustrating a coating system according to some embodiments of the present application;
FIG. 2 is a schematic structural diagram illustrating a coating system according to some embodiments of the present application;
FIG. 3 is a structural block diagram schematically illustrating a coating system according to some embodiments of the present application;
FIG. 4 is a structural block diagram schematically illustrating a coating system according to some other embodiments of the present application;
FIG. 5 is a schematic diagram illustrating a roller according to some embodiments of the present application;
FIG. 6 is a schematic diagram illustrating image capturing of a line scan camera according to some embodiments of the present application;
FIG. 7 is a flowchart illustrating a calibration method for a coating system according to some embodiments of the present application;
FIG. 8 is a flowchart illustrating a calibration method for a coating system according to some other embodiments of the present application;
FIG. 9 is a schematic diagram illustrating a calibration ruler according to some embodiments of the present application;
FIG. 10 is a schematic diagram illustrating a partial structure of a calibration ruler according to some embodiments of the present application;
FIG. 11 is a schematic diagram illustrating an image captured by a line scan camera according to some embodiments of the present application;
FIG. 12 is a schematic diagram illustrating an image captured by a line scan camera according to some other embodiments of the present application;
FIG. 13 is a schematic diagram illustrating a captured image of a calibration ruler after stitching according to some embodiments of the present application;
FIG. 14 is a schematic diagram illustrating a captured image of a calibration ruler after stitching according to some other embodiments of the present application;
FIG. 15 is a schematic diagram illustrating a captured black-and-white image of a calibration ruler after stitching according to some embodiments of the present application;
FIG. 16 is a schematic diagram illustrating a captured image of a calibration ruler after stitching according to some other embodiments of the present application; and
FIG. 17 is a schematic diagram illustrating obtaining electrode plate dimensions according to some embodiments of the present application.

### DETAILED DESCRIPTION

Various exemplary embodiments of the present application are now described in detail with reference to the drawings. The description of the exemplary embodiments is merely illustrative, and is in no way intended to limit the present application and the application or use thereof. The present application may be implemented in many different forms and is not limited to the embodiments described herein. These embodiments are provided so as to make the present application thorough and complete, and to fully convey the scope of the present application to those skilled in the art. It should be noted that, unless otherwise specified, the relative arrangement of components and steps, the composition of materials, numerical expressions, and numerical values set forth in these embodiments should be construed as merely exemplary and not as limiting.

The terms "first", "second", and the like used in the present application do not indicate any order, quantity, or importance, but are merely used to distinguish different parts. Terms such as "include" or "comprise" and similar expressions indicate that the elements preceding such terms encompass the elements after such terms, and do not exclude the possibility that other elements are also encompassed. The terms "upper", "lower", "left", "right", and the like are only used to indicate a relative position relationship, and when the absolute position of the described object is changed, the relative position relationship may also be changed accordingly.

In the present application, when a particular device is described as being disposed between a first device and a second device, an intermediate device may or may not be present between the particular device and the first device or the second device. When a particular device is described as being connected to another device, the particular device may be directly connected to the another device without an intermediate device, or may not be directly connected to the another device in the presence of an intermediate device.

Unless otherwise specifically defined, all terms (including technical terms or scientific terms) used in the present application have the same meanings as commonly understood by those of ordinary skill in the art to which the present application pertains. It should also be understood that terms, such as those defined in commonly used dictionaries, should be interpreted as having meanings that are consistent with their meanings in the context of the related art and should not be interpreted in an idealized or overly formal sense unless explicitly defined as such herein.

Technologies, methods, and devices known to those of ordinary skill in the related art may not be discussed in detail, but where appropriate, the technologies, methods, and devices should be considered as a part of the specification.

In the related art, the debugging of cameras and the camera calibration are time-consuming and have relatively poor accuracy, which affects the overall acceptance progress of the device. The inventors of the present application have analyzed and found that the main reasons may be as follows: (1) The camera calibration method used on-site requires the actual dimension information of the electrode plate produced by the main device. Therefore, calibration can only be performed during actual production. The calibration progress of the camera is affected by the progress of the main device, and the dimensions required for calibration are the manually measured film width and electrode width, which introduces measurement errors and leads to low calibration accuracy; (2) when the main device undergoes a model changeover, the dimension information of the new product type needs to be re-measured for recalibration, which also wastes manpower and material resources; (3) in the case that there is no electrode plate and the encoder is not mounted on the imaging roller, the encoder cannot directly trigger the camera to capture images. As a result, the longitudinal accuracy of the camera cannot be calibrated, and issues such as encoder slippage or slippage between the electrode plate and the roller may occur, resulting in incorrect calculation of longitudinal progress and, consequently, incorrect calculation of the longitudinal dimension of the film.

In view of this, the embodiments of the present application provide a coating system to improve the calibration accuracy of the camera.

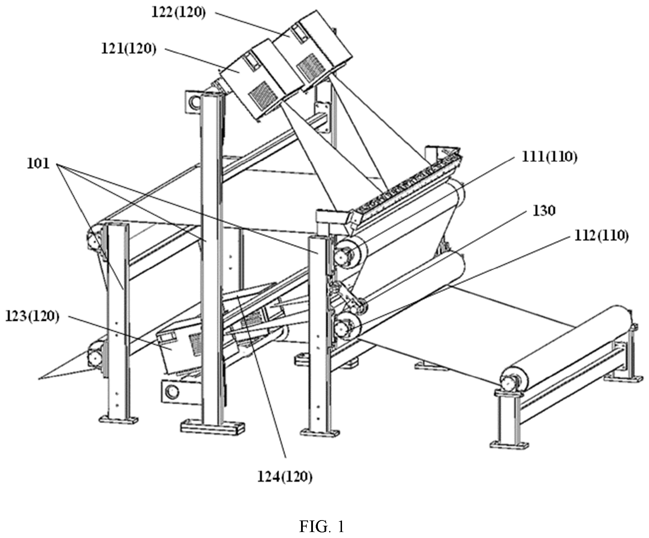

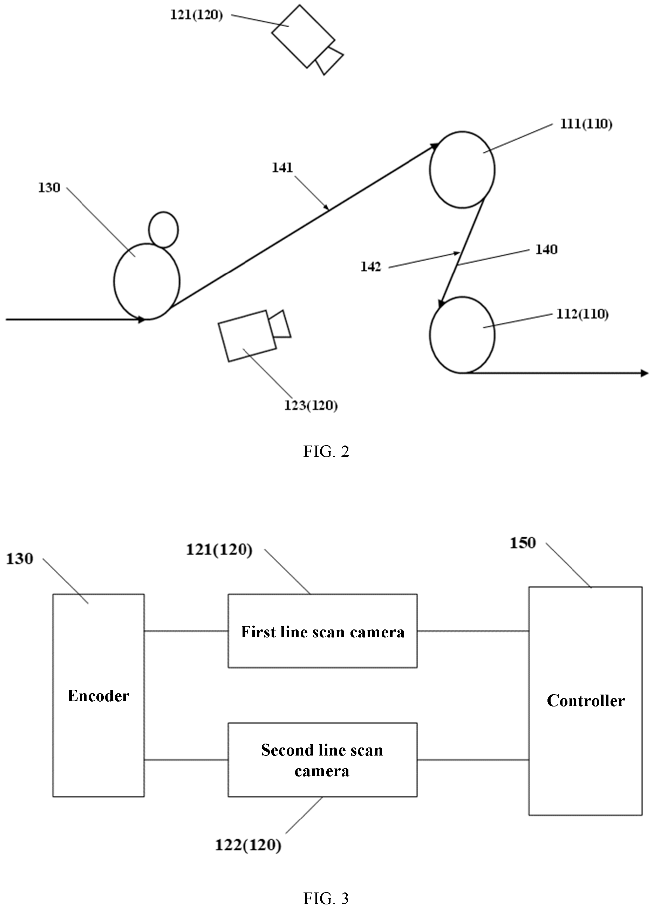

FIG. 1 is a schematic structural diagram illustrating a coating system according to some embodiments of the present application. FIG. 2 is a schematic structural diagram illustrating a coating system according to some embodiments of the present application. FIG. 3 is a structural block diagram schematically illustrating a coating system according to some embodiments of the present application.

As shown in FIG. 1, the coating system includes a roller 110. The roller 110 is disposed on a support 101. The roller 110 includes a first roller 111 and a second roller 112. For example, the first roller 111 and the second roller 112 are arranged in parallel on the support. For example, the first roller 111 may serve as an imaging roller (i.e., a roller used for being photographed by a camera), and the second roller 112 may also serve as an imaging roller.

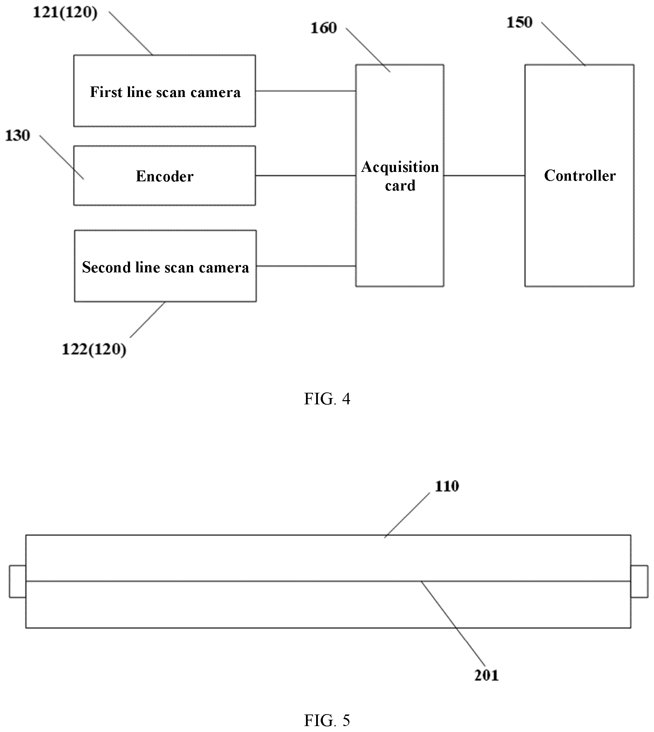

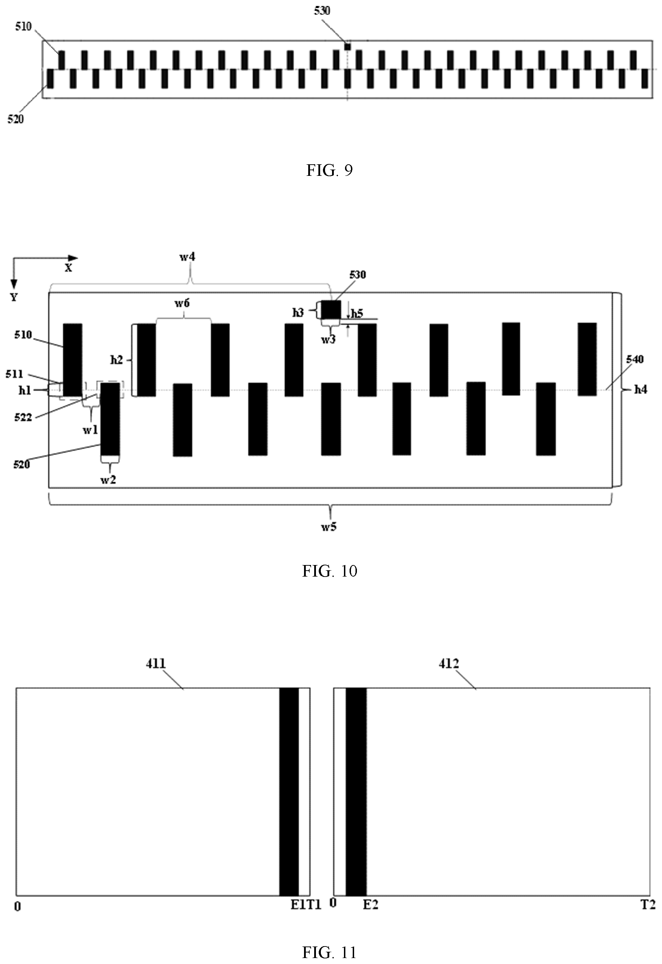

The coating system further includes a calibration ruler. For example, the calibration ruler may be a calibration ruler as shown in FIG. 9. The calibration ruler is disposed on the roller. For example, the calibration ruler is disposed on the first roller 111 or the second roller 112. FIG. 5 is a schematic diagram illustrating a roller according to some embodiments of the present application. For example, as shown in FIG. 5, a positioning line 201 parallel to the first roller may be provided on the surface of the first roller (for example, the imaging roller) 111. For example, the positioning line 201 may be screen-printed on the surface of the first roller 111. The positioning line is parallel to the roller shaft of the first roller. In this way, when the calibration ruler is attached to the roller, the calibration ruler can be attached to the roller in parallel. For example, the calibration ruler is shown in FIG. 9. When the calibration ruler is attached, the upper edge of the calibration ruler is attached to the surface of the first roller along the positioning line. As shown in FIG. 9, the calibration ruler includes a plurality of calibration blocks arranged in a staggered manner.

For example, the calibration ruler has a white background and is made of a soft film material, and the precision thereof may be 0.005 mm.

As shown in FIGs. 1 to 3, the coating system further includes an encoder 130. For example, as shown in FIG. 1, the encoder 130 is coaxially mounted with the first roller 111 or the second roller 112, or is mounted on the support 101 and is in contact with the first roller 111 or the second roller 112 by means of press-wheel mounting (i.e., the encoder pressure wheel is pressed against the imaging roller). The encoder 130 is configured to generate a first trigger signal when driven by the first roller or the second roller. When the roller rotates, the encoder may rotate synchronously. In this way, the encoder 130 can generate the first trigger signal when driven by the first roller 111 or the second roller 112. The first trigger signal is used to trigger a line scan camera (described later) to photograph the calibration ruler.

As shown in FIGs. 1 to 3, the coating system further includes one or a plurality of line scan cameras 120. The one or plurality of line scan cameras 120 are electrically connected to the encoder 130. The one or plurality of line scan cameras 120 are disposed on one side of the first roller 111 or the second roller 112. The imaging field of view of the one or plurality of line scan cameras corresponds to the calibration ruler. The line scan camera is configured to photograph the calibration ruler to acquire an image after receiving the first trigger signal or upon being triggered by a second trigger signal generated inside the line scan camera. Here, the second trigger signal is a trigger signal generated by a clock inside the line scan camera at predetermined time intervals when the line scan camera is in the internal trigger mode, to trigger the line scan camera to photograph at each predetermined time interval.

For example, as shown in FIG. 1, the one or plurality of line scan cameras 120 include a plurality of line scan cameras. For example, the plurality of line scan cameras include a first line scan camera 121 and a second line scan camera 122, the first line scan camera 121 and the second line scan camera 122 may be arranged side by side on the support 101, and imaging fields of view of the first line scan camera 121 and the second line scan camera 122 correspond to the calibration ruler disposed on the first roller 111. In this way, it is convenient to use the first line scan camera 121 and the second line scan camera 122 to acquire images of the calibration ruler on the first roller 111. In addition, as shown in FIG. 2, in the case that an electrode plate is present on the coating system, the first line scan camera 121 and the second line scan camera 122 may further be configured to photograph the first surface 141 of the electrode plate 140.

For another example, as shown in FIG. 1 or 2, the plurality of line scan cameras may further include a third line scan camera 123 and a fourth line scan camera 124. The third line scan camera 123 and the fourth line scan camera 124 may be arranged side by side on the support 101, and the imaging fields of view of the third line scan camera 123 and the fourth line scan camera 124 correspond to the calibration ruler disposed on the second roller 112. In this way, it is convenient to use the third line scan camera 123 and the fourth line scan camera 124 to acquire images of the calibration ruler on the second roller 112. In addition, as shown in FIG. 2, in the case that an electrode plate is present on the coating system, the third line scan camera 123 and the fourth line scan camera 124 are further configured to photograph the second surface 142 of the electrode plate 140.

As shown in FIG. 3, the coating system further includes a controller 150. The controller 150 is electrically connected to the one or plurality of line scan cameras 120. For example, as shown in FIG. 3, the controller 150 is electrically connected to the first line scan camera 121 and the second line scan camera 122. For another example, the controller 150 may also be electrically connected to the third line scan camera 123 and the fourth line scan camera 124. The controller 150 is configured to compute at least one of the lateral accuracy and the longitudinal accuracy of the line scan camera based on the image.

Here, the lateral accuracy refers to the actual lateral length represented by the lateral length of each pixel in the image acquired by the line scan camera, and the longitudinal accuracy refers to the actual longitudinal length represented by the longitudinal length of each pixel in the image acquired by the line scan camera.

Thus, a coating system according to some embodiments of the present application is provided. The coating system includes: a first roller and a second roller; a calibration ruler, disposed on the first roller or the second roller and including a plurality of calibration blocks arranged in a staggered manner; an encoder, coaxially mounted with the first roller or the second roller, or mounted on a support and in contact with the first roller or the second roller by means of press-wheel mounting, and configured to generate a first trigger signal when driven by the first roller or the second roller; one or a plurality of line scan cameras, disposed on one side of the first roller or the second roller, where the imaging field of view of the one or plurality of line scan cameras corresponds to the calibration ruler, and the line scan camera is configured to photograph the calibration ruler to acquire an image after receiving the first trigger signal or upon being triggered by a second trigger signal generated inside the line scan camera; and a controller, configured to compute at least one of the lateral accuracy and the longitudinal accuracy of the line scan camera based on the image. In the embodiments, the calibration ruler is disposed on the roller, the encoder generates the first trigger signal when driven by the roller, the imaging field of view of the line scan camera corresponds to the calibration ruler, the line scan camera photographs the calibration ruler to acquire an image upon being triggered by the first trigger signal or the second trigger signal, and the controller calculates at least one of the lateral accuracy and the longitudinal accuracy of the line scan camera based on the image, such that the calibration accuracy of the camera of the coating system is improved.

The above high-precision calibration ruler suitable for wide-width coating enables the camera calibration operation to be performed independently without waiting for the production of the main device. In addition, in the above coating system, the mechanical structure in the related art is improved, and a mechanism for linkage between the encoder and the roller is provided, such that the longitudinal calibration of the camera does not rely on the movement of the electrode plate.

FIG. 4 is a structural block diagram schematically illustrating a coating system according to some other embodiments of the present application.

As shown in FIG. 4, the coating system includes an encoder 130, one or a plurality of line scan cameras 120 (e.g., a first line scan camera 121 and a second line scan camera 122), and a controller 150. Certainly, as described above, the coating system further includes a roller 110 and a calibration ruler.

In some embodiments, as shown in FIG. 4, the coating system further includes an acquisition card 160. The acquisition card 160 is electrically connected to the encoder 130 and is electrically connected to the one or plurality of line scan cameras 120. The acquisition card 160 is configured to receive a first trigger signal from the encoder 130, transmit the first trigger signal to the one or plurality of line scan cameras 120, receive the image captured by the one or plurality of line scan cameras, and transmit the image to the controller 150. For example, the acquisition card 160 transmits the first trigger signal to the first line scan camera 121 and the second line scan camera 122, receives images captured by the first line scan camera 121 and the second line scan camera 122, and transmits the images to the controller 150. In the embodiments, the acquisition of images is conveniently achieved through the acquisition card.

FIG. 10 is a schematic diagram illustrating a partial structure of a calibration ruler according to some embodiments of the present application. The calibration ruler is described in detail below with reference to FIGs. 9 and 10.

As shown in FIGs. 9 and 10, the calibration ruler includes: a plurality of first calibration blocks 510 spaced apart from each other in a first row and a plurality of second calibration blocks 520 spaced apart from each other in a second row. The plurality of first calibration blocks 510 and the plurality of second calibration blocks 520 are arranged in a staggered manner. The first portion 511 of each of the plurality of first calibration blocks 510 and the second portion 522 of each of the plurality of second calibration blocks 520 are arranged on the same straight line 540.

As described above, the calibration ruler is attached to the roller along the positioning line on the roller. For example, the calibration ruler is attached to the first roller along the positioning line on the first roller, or attached to the second roller along the positioning line on the second roller. In some embodiments, the line scan camera photographs the calibration ruler upon being triggered by the second trigger signal to acquire a first image, and photographs the calibration ruler after receiving the first trigger signal to acquire a second image.

In the above embodiments, by providing two rows of calibration blocks arranged in a staggered manner, the camera can conveniently acquire corresponding images, so as to achieve the calibration of the camera accuracy.

In some embodiments, the dimension of the first calibration block 510 is the same as the dimension of the second calibration block 520. For example, the length h2 of the first calibration block 510 in the direction perpendicular to the extension direction of the calibration ruler (i.e., the X direction in FIG. 10) is 50 millimeters (mm) ± 0.01 mm, that is, the range of the length h2 of the first calibration block 510 is 49.99 mm ≤ h2 ≤ 50.01 mm. Similarly, the length of the second calibration block 520 in the direction perpendicular to the extension direction of the calibration ruler may also be 50 mm ± 0.01 mm, that is, the range of the length of the second calibration block 520 is 49.99 mm ≤ the length of the second calibration block 520 ≤ 50.01 mm. For another example, the width w2 of the second calibration block 520 in the direction parallel to the extension direction of the calibration ruler is 15 mm ± 0.01 mm, that is, the range of the width w2 of the second calibration block 520 is 14.99 mm ≤ w2 ≤ 15.01 mm. Similarly, the width of the first calibration block 510 in the direction parallel to the extension direction of the calibration ruler is 15 mm ± 0.01 mm, that is, the range of the width of the first calibration block 510 is 14.99 mm ≤ the width of the first calibration block 510 ≤ 15.01 mm.

Certainly, those skilled in the art can understand that the dimension of the first calibration block 510 and the dimension of the second calibration block 520 may also be different. The scope of the present application is not limited thereto.

In some embodiments, the first spacing w1 between the first calibration block 510 and the second calibration block 520 adjacent to each other is 15 mm ± 0.01 mm, that is, the range of the first spacing w1 is 14.99 mm ≤ w1 ≤ 15.01 mm. Certainly, those skilled in the art can understand that the scope of the present application is not limited to the specific value of the first spacing w1.

In some embodiments, the second spacing w6 between two adjacent first calibration blocks 510 is 45 mm ± 0.01 mm, that is, the range of the second spacing w6 is 44.99 mm ≤ w6 ≤ 45.01 mm. Certainly, those skilled in the art can understand that the scope of the present application is not limited to the specific value of the second spacing w6.

In some embodiments, the spacing between two adjacent second calibration blocks 520 is equal to the second spacing. Certainly, those skilled in the art can understand that the spacing between two adjacent second calibration blocks 520 may not be equal to the second spacing.

In some embodiments, the first dimension w5 of the calibration ruler in the direction parallel to the extension direction of the calibration ruler is 1600 mm ± 0.05 mm, that is, the range of the first dimension w5 of the calibration ruler is 1599.95 mm ≤ w6 ≤ 1600.05 mm; and the second dimension h4 of the calibration ruler in the direction perpendicular to the extension direction of the calibration ruler is 150 mm ± 0.05 mm, that is, the range of the second dimension h4 of the calibration ruler is 149.95 mm ≤ h4 ≤ 150.05 mm. Certainly, those skilled in the art can understand that the scope of the present application is not limited to the specific values of the first dimension and the second dimension of the calibration ruler.

In some embodiments, the dimension h1 of the first portion 511 of the first calibration block 510 in the direction perpendicular to the extension direction of the calibration ruler is 2 mm ± 0.01 mm, that is, the range of the dimension h1 is 1.99 mm ≤ h1 ≤ 2.01 mm. Certainly, those skilled in the art can understand that the scope of the present application is not limited to the specific value of the dimension h1.

In some embodiments, the dimension of the second portion 522 of the second calibration block 520 in the direction perpendicular to the extension direction of the calibration ruler is the same as the above dimension h1, that is, the dimension is also 2 mm ± 0.01 mm. Certainly, those skilled in the art can understand that the scope of the present application is not limited to the specific value of the dimension of the second portion 522.

In some embodiments, as shown in FIGs. 9 and 10, the calibration ruler further includes a third calibration block 530. The third calibration block 530 is located in a row different from the first row and the second row. For example, the third calibration block 530 is located above the first row where the plurality of first calibration blocks 510 are located. In the embodiments, by providing the third calibration block, it is convenient to determine the overlapping field of view of the two cameras based on the third calibration block.

For example, the dimension w3 of the third calibration block 530 in the direction parallel to the extension direction of the calibration ruler is 15 ± 0.01 mm, that is, the range of the dimension w3 of the third calibration block 530 is 14.99 mm ≤ w3 ≤ 15.01 mm; and the dimension h3 of the third calibration block 530 in the direction perpendicular to the extension direction of the calibration ruler is 15 ± 0.01 mm, that is, the range of the dimension h3 of the third calibration block 530 is 14.99 mm ≤ h3 ≤ 15.01 mm. Certainly, those skilled in the art can understand that the scope of the present application is not limited to the specific values of the dimensions w3 and h3.

For example, the spacing h5 between the third calibration block 530 and the first calibration block 510 in the direction perpendicular to the extension direction of the calibration ruler is 2 mm ± 0.01 mm, that is, the range of the spacing h5 is 1.99 mm ≤ h5 ≤ 2.01 mm. Certainly, those skilled in the art can understand that the scope of the present application is not limited to the specific value of the dimension h5.

For example, the distance w4 between the third calibration block 530 and one edge of the calibration ruler is 800 mm ± 0.05 mm, that is, the range of the distance w4 is 799.95 mm ≤ w4 ≤ 800.05 mm. Certainly, those skilled in the art can understand that the scope of the present application is not limited to the specific value of the distance w4.

In some embodiments, as shown in FIGs. 9 and 10, the third calibration block 530 is aligned with one second calibration block of the plurality of second calibration blocks 520 in the direction perpendicular to the extension direction of the second row. In the embodiments, by aligning the third calibration block with one second calibration block, it is convenient to determine the overlapping field of view of the two cameras based on the third calibration block.

In some embodiments, the controller 150 is configured to compute the lateral accuracy based on the first image in the case that the one or plurality of line scan cameras capture the first image upon being triggered by the second trigger signal, where the first image includes the first portion and the second portion alternately arranged on the same straight line. For example, the second trigger signal is a signal triggered inside the camera. For example, the line scan camera photographs the calibration ruler upon being triggered by the second trigger signal to acquire the first image, and transmits the first image to the controller. The controller computes the lateral calibration accuracy of the camera based on the first image. In the embodiments, by means of the internal trigger of the camera, the first image is acquired, thereby facilitating the calculation of the lateral calibration accuracy of the camera.

In some embodiments, the controller 150 is configured to compute the longitudinal accuracy based on the second image in the case that the one or plurality of line scan cameras capture the second image after receiving the first trigger signal, where the second image includes the plurality of first calibration blocks and the plurality of second calibration blocks. For example, the camera trigger mode is changed to encoder triggering, the imaging roller is rotated, and the line scan camera photographs the calibration ruler after receiving the first trigger signal transmitted by the encoder to acquire a second image. The acquired second image is saved, the second image is transmitted to the controller, and the controller computes the longitudinal calibration accuracy of the camera based on the second image.

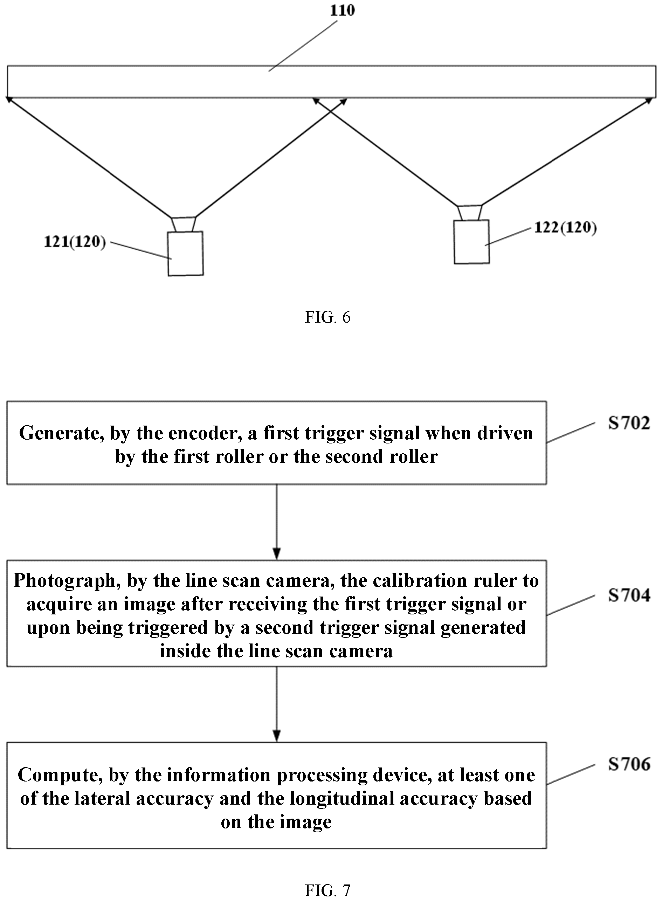

In some embodiments, the one or plurality of line scan cameras 120 include a plurality of line scan cameras, where the plurality of line scan cameras are arranged side by side, imaging points of the plurality of line scan cameras are collinear, and the imaging field of view of each of the plurality of line scan cameras corresponds to a portion of the calibration ruler. For example, as shown in FIGs. 1 and 6, the plurality of line scan cameras 120 include a first line scan camera 121 and a second line scan camera 122, where the first line scan camera 121 and the second line scan camera 122 are arranged side by side, the imaging points of the first line scan camera 121 and the second line scan camera 122 are collinear, the imaging field of view of the first line scan camera 121 corresponds to a portion of the calibration ruler, and the imaging field of view of the second line scan camera 122 corresponds to a portion of the calibration ruler. As shown in FIG. 6, in some cases, the first line scan camera 121 and the second line scan camera 122 have overlapping fields of view. For example, the length of the overlapping region may be designed to be 30 mm.

It should be noted that although two line scan cameras arranged side by side are described above, the scope of the present application is not limited thereto. For example, only one line scan camera may be provided, or three or more line scan cameras arranged side by side may be provided. Here, the number of line scan cameras is set according to actual needs.

In some embodiments, the controller 150 is configured to determine the overlapping fields of view of the plurality of line scan cameras in the case that each of the plurality of line scan cameras captures an image including the third calibration block. In the embodiments, the overlapping fields of view of the plurality of line scan cameras are determined, thereby facilitating the removal of the overlapping fields of view in the accuracy calibration process and thus improving the calibration accuracy of the camera.

For example, the first portion of the first calibration block and the second portion of the second calibration block in the calibration ruler are moved to the imaging point of the camera, images are acquired by means of the internal trigger of the camera, the posture of the camera is adjusted until the images acquired by the two cameras are both in a black-and-white pattern, and the images are saved. At this point, it indicates that the imaging points of the two cameras are collinear, and then the cameras are fixed; the imaging roller is rotated such that the imaging point is the third calibration block in the middle of the calibration ruler, the internal trigger mode is activated and the cameras are adjusted laterally such that both the right end of the first line scan camera and the left end of the second line scan camera can photograph the third calibration block, images are acquired and saved, and the overlapping fields of view of the two cameras are determined based on the third calibration block in the middle of the calibration ruler. In this way, the overlapping fields of view of the plurality of line scan cameras are determined.

In some embodiments, each of the plurality of line scan cameras is configured to capture the first image upon being triggered by the second trigger signal, such that the plurality of line scan cameras acquire a plurality of first images. For example, the first line scan camera 121 and the second line scan camera 122 both photograph the calibration ruler to separately acquire the first image upon being triggered by the second trigger signal, thereby obtaining two first images.

In some embodiments, the controller 150 is configured to remove the overlapping portions of the plurality of first images based on the overlapping fields of view of the plurality of line scan cameras, stitch the plurality of first images from which the overlapping portions are removed into a third image, and compute the lateral accuracy based on the third image. In the embodiments, by removing the overlapping portions of the plurality of first images to stitch the plurality of first images into the third image, the lateral accuracy of the camera is calculated based on the third image, thereby improving the lateral calibration accuracy of the camera.

In some embodiments, the controller 150 is configured to compute, based on the lateral length of the region between two adjacent edges in the first portion and the second portion alternately arranged on the same straight line and lateral pixel positions of the two adjacent edges, the lateral accuracy corresponding to the region between the two adjacent edges. In this way, the calculation of the lateral accuracy of the camera is achieved, and the lateral calibration accuracy of the camera is improved.

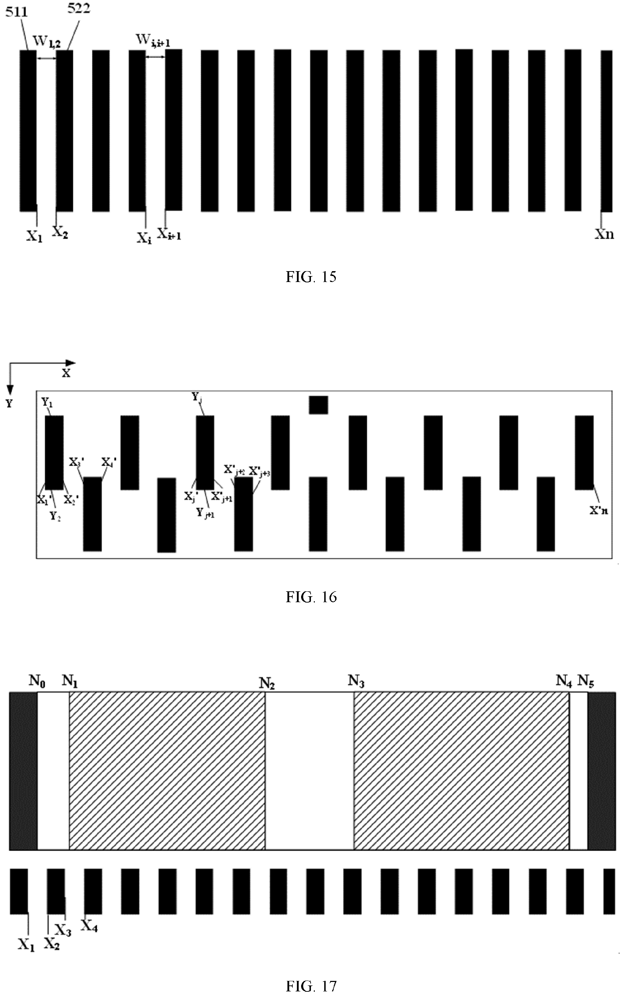

FIG. 15 is a schematic diagram illustrating a captured black-and-white image of a calibration ruler after stitching according to some embodiments of the present application.

For example, FIG. 15 illustrates the first portion 511 of the first calibration block 510 and the second portion 522 of the second calibration block 520 alternately arranged on the same straight line in the stitched third image. In this way, the relational expression for calculating the lateral accuracy of the camera is as follows: ${H}_{i , i + 1} = \frac{{W}_{i , i + 1}}{{X}_{i + 1} - {X}_{i}} ,$ (1)
where *H*_{*i,i*+1} is the lateral accuracy of the region between the i-th edge and the (i+1)-th edge in the first portion and the second portion alternately arranged on the same straight line, *W*_{*i,i*+1} is the lateral length of the region between the i-th edge and the (i+1)-th edge, *X*_{*i*+1} is the lateral pixel position of the (i+1)-th edge, *Xᵢ* is the lateral pixel position of the i-th edge, i ≥ 1, and i is a positive integer.

Here, the lateral pixel position refers to the pixel position of an image corresponding to a certain edge in the lateral direction (i.e., corresponding to which pixel in the lateral direction of the image). In some embodiments, each of the plurality of line scan cameras is configured to capture the second image after receiving the first trigger signal, such that the plurality of line scan cameras acquire a plurality of second images.

For example, the camera trigger mode is changed to encoder triggering, the imaging roller is rotated, and after receiving the first trigger signal transmitted by the encoder, both the first line scan camera 121 and the second line scan camera 122 capture the second image, thereby obtaining two second images.

In some embodiments, the controller 150 is configured to remove the overlapping portions of the plurality of second images based on the overlapping fields of view of the plurality of line scan cameras, stitch the plurality of second images from which the overlapping portions are removed into a fourth image, and compute the longitudinal accuracy based on the fourth image. In the embodiments, by removing the overlapping portions of the plurality of second images to stitch the plurality of second images into the fourth image, the longitudinal accuracy is calculated based on the fourth image, thereby improving the longitudinal calibration accuracy of the camera.

In some embodiments, the controller 150 is configured to compute, based on the longitudinal length of the first calibration block or the second calibration block between two edges in the first portion and the second portion alternately arranged on the same straight line, and the longitudinal pixel position of a lower edge and the longitudinal pixel position of an upper edge of the first calibration block or the second calibration block between the two edges, the longitudinal accuracy corresponding to the region between the two edges. In this way, the calculation of the longitudinal accuracy of the camera is achieved, and the longitudinal calibration accuracy of the camera is improved.

FIG. 16 is a schematic diagram illustrating a captured image of a calibration ruler after stitching according to some other embodiments of the present application.

For example, FIG. 16 illustrates the first calibration block 510 and the second calibration block 520 in the stitched fourth image. In this way, the relational expression for calculating the longitudinal accuracy of the camera is as follows: ${L}_{j , j + 2} = \frac{{H}_{j , j + 1}}{{Y}_{j + 1} - {Y}_{j}} ,$ (2)
where *L*_{*j,j*+2} is the longitudinal accuracy of the region between the j-th edge (Xⱼ') to the (j+2)-th edge (Xⱼ₊₂') in the first portion and the second portion alternately arranged on the same straight line, *H*_{*i,i*+1} is the longitudinal length of the first calibration block or the second calibration block between the j-th edge and the (j+2)-th edge, *Y*_{*j*+1} is the longitudinal pixel position of the lower edge of the first calibration block or the second calibration block between the j-th edge and the (j+2)-th edge, *Yⱼ* is the longitudinal pixel position of the upper edge of the first calibration block or the second calibration block between the j-th edge and the (j+2)-th edge, j ≥ 1, and j is a positive integer.

Here, the longitudinal pixel position refers to the pixel position of an image corresponding to a certain edge in the longitudinal direction (i.e., corresponding to which pixel in the longitudinal direction of the image).

FIG. 7 is a flowchart illustrating a calibration method for a coating system according to some embodiments of the present application. Here, the coating system includes: a first roller and a second roller; a calibration ruler, disposed on the first roller or the second roller and including a plurality of calibration blocks arranged in a staggered manner; an encoder, coaxially mounted with the first roller or the second roller, or mounted on a support and in contact with the first roller or the second roller by means of press-wheel mounting; one or a plurality of line scan cameras, disposed on one side of the first roller or the second roller, where the imaging field of view of the one or plurality of line scan cameras corresponds to the calibration ruler; and a controller. As shown in FIG. 7, the calibration method includes steps S702 to S706.

In step S702, the encoder generates a first trigger signal when driven by the first roller or the second roller.

In step S704, the line scan camera photographs the calibration ruler to acquire an image after receiving the first trigger signal or upon being triggered by a second trigger signal generated inside the line scan camera.

In step S706, the controller computes at least one of the lateral accuracy and the longitudinal accuracy of the line scan camera based on the image.

Thus, the calibration method for the coating system according to some embodiments of the present application is provided. The calibration method includes: generating, by the encoder, the first trigger signal when driven by the first roller or the second roller; photographing, by the line scan camera, the calibration ruler to acquire an image after receiving the first trigger signal or upon being triggered by the second trigger signal generated inside the line scan camera; and computing, by the controller, at least one of the lateral accuracy and the longitudinal accuracy of the line scan camera based on the image. In this way, the calibration accuracy of the camera of the coating system is improved.

In some embodiments, the calibration ruler includes: a plurality of first calibration blocks spaced apart from each other in a first row and a plurality of second calibration blocks spaced apart from each other in a second row, where the plurality of first calibration blocks and the plurality of second calibration blocks are arranged in a staggered manner, and a first portion of each of the plurality of first calibration blocks and a second portion of each of the plurality of second calibration blocks are arranged on a same straight line; the calibration ruler is attached to the first roller along a positioning line on the first roller, or attached to the second roller along a positioning line on the second roller. Photographing, by the line scan camera, the calibration ruler to acquire the image after receiving the first trigger signal or upon being triggered by the second trigger signal generated inside the line scan camera, includes: photographing, by the line scan camera, the calibration ruler to acquire a first image upon being triggered by the second trigger signal; and computing, by the controller, at least one of the lateral accuracy and the longitudinal accuracy of the line scan camera based on the image, includes: computing, by the controller, the lateral accuracy based on the first image in the case that the one or plurality of line scan cameras capture the first image upon being triggered by the second trigger signal, where the first image includes the first portion and the second portion alternately arranged on the same straight line. In the embodiments, by means of the internal trigger of the camera, the first image is acquired, thereby facilitating the calculation of the lateral calibration accuracy of the camera.

In some embodiments, photographing, by the line scan camera, the calibration ruler to acquire the image after receiving the first trigger signal or upon being triggered by the second trigger signal generated inside the line scan camera, includes: photographing, by the line scan camera, the calibration ruler to acquire the second image after receiving the first trigger signal; and computing, by the controller, at least one of the lateral accuracy and the longitudinal accuracy of the line scan camera based on the image, includes: computing, by the controller, the longitudinal accuracy based on the second image in the case that the one or plurality of line scan cameras capture the second image after receiving the first trigger signal, where the second image includes the plurality of first calibration blocks and the plurality of second calibration blocks. In the embodiments, the line scan camera is triggered by the encoder to acquire the second image, thereby facilitating the calculation of the longitudinal calibration accuracy of the camera.

In some embodiments, the calibration ruler further includes: a third calibration block located in a row different from the first row and the second row. The one or more line scan cameras include a plurality of line scan cameras, where the plurality of line scan cameras are arranged side by side, imaging points of the plurality of line scan cameras are collinear, and the imaging field of view of each of the plurality of line scan cameras corresponds to a portion of the calibration ruler. The calibration method further includes: determining, by the controller, overlapping fields of view of the plurality of line scan cameras in the case that each of the plurality of line scan cameras captures an image including the third calibration block. In the embodiments, the overlapping fields of view of the plurality of line scan cameras are determined, thereby facilitating the removal of the overlapping fields of view in the accuracy calibration process and thus improving the calibration accuracy of the camera.

In some embodiments, photographing, by the line scan camera, the calibration ruler to acquire the first image upon being triggered by the second trigger signal, includes: capturing, by each of the plurality of line scan cameras, the first image upon being triggered by the second trigger signal, such that the plurality of line scan cameras acquire a plurality of first images; and computing, by the controller, the lateral accuracy based on the first image in the case that the one or plurality of line scan cameras capture the first image upon being triggered by the second trigger signal, includes: removing, by the controller, overlapping portions of the plurality of first images based on the overlapping fields of view of the plurality of line scan cameras, stitching the plurality of first images from which the overlapping portions are removed into a third image, and computing the lateral accuracy based on the third image. In the embodiments, by removing the overlapping portions of the plurality of first images to stitch the plurality of first images into the third image, the lateral accuracy of the camera is calculated based on the third image, thereby improving the lateral calibration accuracy of the camera.

In some embodiments, computing, by the controller, the lateral accuracy based on the third image includes: computing, by the controller, based on the lateral length of the region between two adjacent edges in the first portion and the second portion alternately arranged on the same straight line and lateral pixel positions of the two adjacent edges, the lateral accuracy corresponding to the region between the two adjacent edges. In this way, the calculation of the lateral accuracy of the camera is achieved, and the lateral calibration accuracy of the camera is improved.

In some embodiments, photographing, by the line scan camera, the calibration ruler to acquire the second image after receiving the first trigger signal, includes: capturing, by each of the plurality of line scan cameras, the second image after receiving the first trigger signal, such that the plurality of line scan cameras obtain a plurality of second images; and computing, by the controller, the longitudinal accuracy based on the second image in the case that the one or plurality of line scan cameras capture the second image after receiving the first trigger signal, includes: removing, by the controller, overlapping portions of the plurality of second images based on the overlapping fields of view of the plurality of line scan cameras, stitching the plurality of second images from which the overlapping portions are removed into a fourth image, and computing the longitudinal accuracy based on the fourth image. In the embodiments, by removing the overlapping portions of the plurality of second images to stitch the plurality of second images into the fourth image, the longitudinal accuracy is calculated based on the fourth image, thereby improving the longitudinal calibration accuracy of the camera.

In some embodiments, computing, by the controller, the longitudinal accuracy based on the fourth image includes: computing, by the controller, based on the longitudinal length of the first calibration block or the second calibration block between two edges in the first portion and the second portion alternately arranged on the same straight line, and the longitudinal pixel position of a lower edge and the longitudinal pixel position of an upper edge of the first calibration block or the second calibration block between the two edges, the longitudinal accuracy corresponding to the region between the two edges. In this way, the calculation of the longitudinal accuracy of the camera is achieved, and the longitudinal calibration accuracy of the camera is improved.

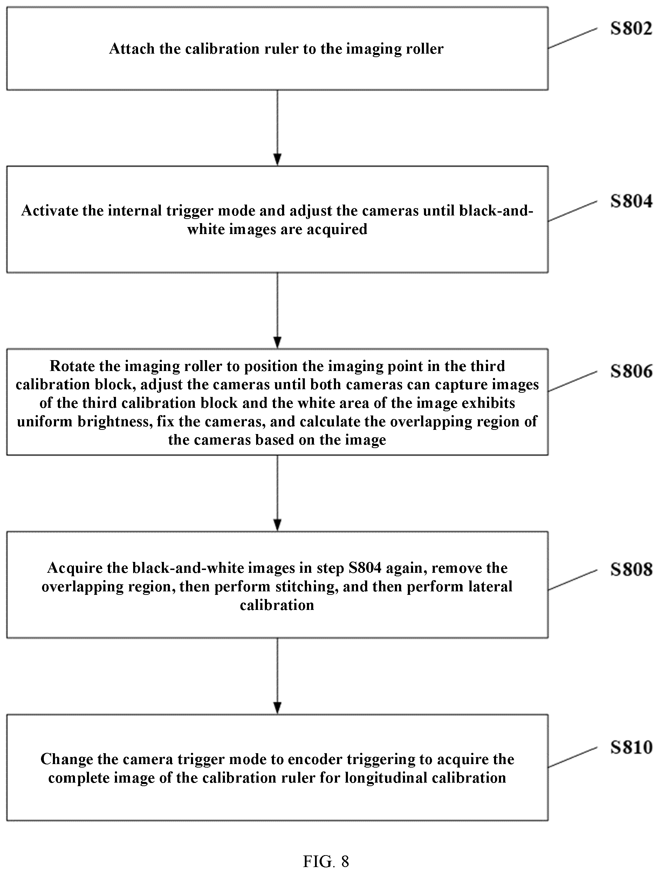

FIG. 8 is a flowchart illustrating a calibration method for a coating system according to some other embodiments of the present application. As shown in FIG. 8, the calibration method includes steps S802 to S810. The line scan camera including the first line scan camera 121 and the second line scan camera 122 is described below as an example.

In step S802, the calibration ruler is attached to the imaging roller. For example, the imaging roller is the first roller or the second roller. The upper end of the calibration ruler is attached to the imaging roller along the positioning line of the imaging roller, as shown in FIG. 5.

In step S804, the internal trigger mode is activated and the cameras are adjusted until black-and-white images are acquired. For example, the laterally overlapping portions of the black blocks of the calibration ruler (i.e., the first portion 511 of the first calibration block 510 and the second portion 522 of the second calibration block 520) are moved to the imaging point of the line scan camera, and the line scan camera captures an image upon being triggered by the second trigger signal, that is, the image is acquired by means of the internal trigger of the camera. The posture of the camera is adjusted until the images acquired by the two cameras are both in a black-and-white pattern, and the images are saved. At this point, it indicates that the imaging points of the two cameras are collinear, and then the cameras are fixed.

In step S806, the imaging roller is rotated to position the imaging point in the third calibration block, and the internal trigger mode is activated and the cameras are adjusted laterally until both cameras can capture images of the third calibration block and the white area of the image exhibits uniform brightness. The cameras are fixed, and the overlapping region of the cameras is calculated based on the image.

FIG. 11 is a schematic diagram illustrating an image captured by a line scan camera according to some embodiments of the present application. FIG. 11 illustrates a first image 411 captured by the first line scan camera and a second image 412 captured by the second line scan camera. That is, the right end of the first line scan camera and the left end of the second line scan camera can both capture images of the third calibration block, the images are acquired and saved, and the overlapping fields of view of the two cameras are determined based on the third calibration block in the middle of the calibration ruler.

The main processes (1) to (3) of calculating the overlapping region of the field of view in step S806 are described in detail below.

Here, the total number of lateral pixels of the first image 411 is T1, and the total number of lateral pixels of the second image 412 is T2. For example, T1 = T2 = T.

In step (1), the right edge position or the left edge position of the third calibration block in the calibration ruler is positioned by means of the straight line search method in the image processing algorithm. For example, as shown in FIG. 11, the lateral pixel position E1 of the pixel where the right edge is located is output, and the overlapping region removed by the first line scan camera is (E1, T1].

In step (2), similarly, for the second image 412 captured by the second line scan camera, the right edge position or the left edge position of the third calibration block of the calibration ruler is positioned. For example, as shown in FIG. 11, the lateral pixel position E2 of the pixel where the right edge is located is output, and the overlapping region required to be removed by the second line scan camera is [0, E2].

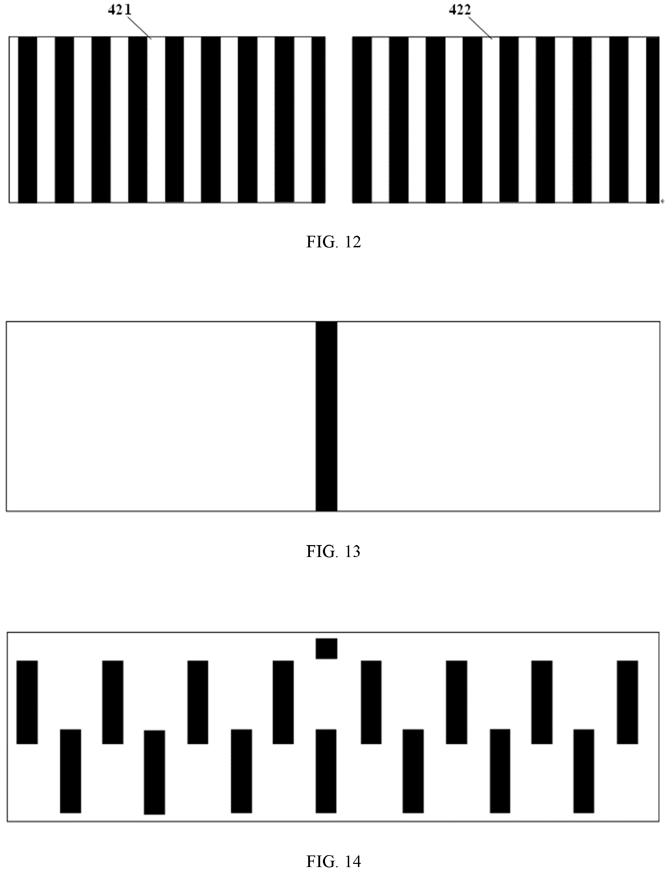

In step (3), the images from which the overlapping regions are completely removed are stitched to obtain a stitched image, for example, as shown in FIG. 13.

In step S808, the black-and-white images in step S804 are acquired again, the overlapping fields of view are removed, and then lateral calibration is performed. Here, the captured images are combined into a complete black-and-white image (that is, the third image described above), and the lateral accuracy of the camera is calibrated in blocks.

As shown in FIG. 12, the first line scan camera captures one first image 421, and the second line scan camera captures another first image 422. The controller removes overlapping portions of the two first images 421 and 422 based on the overlapping fields of view of the first line scan camera and the second line scan camera, stitches the two first images from which the overlapping portions are removed into the third image (for example, as shown in FIG. 15), and computes the lateral accuracy based on the third image.

In step S808, the process of the lateral accuracy calibration of the camera is as follows:
(1) The stitched image of the images acquired by the first line scan camera and the second line scan camera by means of the internal trigger is as shown in FIG. 15.
(2) The relational expression for calculating the lateral accuracy of the camera is as follows: ${H}_{i , i + 1} = \frac{{W}_{i , i + 1}}{{X}_{i + 1} - {X}_{i}} ,$ (1)
   where *H*_{*i,i*+1} is the lateral accuracy of the region between the i-th edge and the (i+1)-th edge in the first portion and the second portion alternately arranged on the same straight line, *W*_{*i,i*+1} is the lateral length of the region between the i-th edge and the (i+1)-th edge (for example, the spacing between two black bars is *W*_{*i,i*+1}), *X*_{*i*+1} is the lateral pixel position of the (i+1)-th edge (i.e., the pixel position of the (i+1)-th edge in the image), and *Xᵢ* is the lateral pixel position of the i-th edge (i.e., the pixel position of the i-th edge in the image), i ≥ 1, and i is a positive integer. Here,
   for example, the width of each black bar and white bar (i.e., the portion between two black bars) is equal, both being D millimeters. The edge position {X₁, X₂, X₃, ..., Xₙ₋₁, Xₙ} of each black bar and each white bar is acquired by using the edge detection tool in the image algorithm. The lateral accuracy of the region (X₁, X₂] is calculated as W_{1,2}/(X₂ - X₁) = D/(X₂ - X₁), the lateral of the region (X₂, X₃] is calculated as D/(X₃ - X₂), with the remaining regions calculated in the same manner.

In addition, the lateral pixel accuracy of [0, X₁] may be determined using the calibration value of the (X₁, X₂] region. Similarly, the lateral accuracy of the (Xₙ, T + E1 - E2) region is determined as D/(Xₙ - Xₙ₋₁), where T + E1 - E2 represents the lateral pixel position of the rightmost edge in the stitched image. Here, the lateral pixel position of the rightmost edge in the stitched image is calculated as 2T - (T - E1 + E2) = T + E1 - E2.

In step S810, the camera trigger mode is changed to encoder triggering, and the imaging roller is rotated to acquire the complete image of the calibration ruler for longitudinal calibration. For example, after the encoder triggers the camera to capture an image, the acquired image is saved, and after the overlapping region is removed, the longitudinal calibration accuracy of the camera is calculated in blocks.

For example, the first line scan camera and the second line scan camera both capture images after receiving the first trigger signal transmitted by the encoder, so as to obtain two second images. The controller removes the overlapping portion of the two second images based on overlapping fields of view of the two line scan cameras, stitches the two second images from which the overlapping portion is removed into a fourth image (for example, as shown in FIG. 14), and computes the longitudinal accuracy based on the fourth image.

In step S810, the process of the longitudinal accuracy calibration of the camera is as follows:
(1) After being triggered by the encoder, the camera acquires images, and the controller stitches the images to obtain the fourth image, as shown in FIG. 14.
(2) For example, FIG. 16 illustrates the first calibration block 510 and the second calibration block 520 in the stitched fourth image. In this way, the relational expression for calculating the longitudinal accuracy of the camera is as follows: ${L}_{j , j + 2} = \frac{{H}_{j , j + 1}}{{Y}_{j + 1} - {Y}_{j}} ,$ (2)
   where *L*_{*j,j*+2} is the longitudinal accuracy of the region between the j-th edge (Xⱼ') to the (j+2)-th edge (Xⱼ₊₂') in the first portion and the second portion alternately arranged on the same straight line, *H*_{*i,i*+1} is the longitudinal length of the first calibration block or the second calibration block between the j-th edge and the (j+2)-th edge, *Y*_{*j*+1} is the longitudinal pixel position of the lower edge of the first calibration block or the second calibration block between the j-th edge and the (j+2)-th edge, *Yⱼ* is the longitudinal pixel position of the upper edge of the first calibration block or the second calibration block between the j-th edge and the (j+2)-th edge, j ≥ 1, and j is a positive integer.

For example, the height of each black bar is h2, i.e., *H*_{*i,i*+1} = h2. The lateral edge position {X₁', X₂', X₃', ..., X'ₙ₋₁, X'ₙ} of each black bar is acquired by using the edge detection tool in the image algorithm. The longitudinal accuracy of the region (X₁', X₃'] is calculated as: h2/(Y₂ - Y₁), the longitudinal accuracy of the region (X3, X5] is calculated as: h2/(Y₄ - Y₃), with the remaining regions calculated in the same manner.

In addition, the longitudinal pixel accuracy of [0, X₁'] may be determined using the calibration value of the (X₁', X₃'] region. Similarly, the longitudinal accuracy of the (X'ₙ, T + E1 - E2) region may be determined as h2/(Yₙ - Yₙ₋₁).

Thus, the calibration method for the coating system according to some other embodiments of the present application is provided. In the calibration method, the debugging operation of the camera is independent of the main device and does not rely on the electrode plate produced by the main device, such that the calibration operation of the camera can be performed independently, the debugging time of the line scan camera is reduced, and the debugging efficiency is improved. The calibration method makes the camera calibration independent of the coating type. When the production line undergoes a model changeover, recalibration of the camera is not required. The use of the high-precision calibration ruler reduces human measurement errors caused by the manual measurement of the electrode width and film width dimension information, and improves the calibration accuracy of the camera, thereby improving the measurement accuracy of the coating system.

FIG. 17 is a schematic diagram illustrating obtaining electrode plate dimensions according to some embodiments of the present application.

After the accuracy calibration of the camera, the electrode plates can be coated on the coating system. As shown in FIG. 17, for example, the dimension of the region between position N₀ and position N₁ of the electrode plate may be calculated as follows: $L = \left({X}_{2}-{N}_{0}\right) ∗ \frac{D}{{X}_{2} - {X}_{1}} + D + \left({N}_{1}-{X}_{3}\right) ∗ \frac{D}{{X}_{4} - {X}_{3}} .$ (3)

As described above, D is the width of each black bar and each white bar, and X₁, X₂, X₃, and X₄ are the pixel positions of the four edges.

In this way, after the above accuracy calibration, the dimensions of some portions of the electrode plate can be calculated.

Thus, various embodiments of the present application have been described in detail. In order to avoid obscuring the concept of the present application, some details well known in the art are not described. Based on the above description, those skilled in the art can fully understand how to implement the technical solutions disclosed herein.

Although some specific embodiments of the present application have been described in detail through examples, those skilled in the art should understand that the above examples are merely for illustration and are not intended to limit the scope of the present application. Those skilled in the art should understand that modifications to the above embodiments or equivalent substitutions for certain technical features may be made without departing from the scope and spirit of the present application. The scope of the present application is defined by the appended claims.

## Claims

1. A coating system, comprising:
a first roller and a second roller;
a calibration ruler, disposed on the first roller or the second roller and comprising a plurality of calibration blocks arranged in a staggered manner;
an encoder, coaxially mounted with the first roller or the second roller, or mounted on a support and in contact with the first roller or the second roller by means of press-wheel mounting, and configured to generate a first trigger signal when driven by the first roller or the second roller;
one or a plurality of line scan cameras, disposed on one side of the first roller or the second roller, wherein an imaging field of view of the one or plurality of line scan cameras corresponds to the calibration ruler, and the line scan camera is configured to photograph the calibration ruler to acquire an image after receiving the first trigger signal or upon being triggered by a second trigger signal generated inside the line scan camera; and
a controller, configured to compute at least one of a lateral accuracy and a longitudinal accuracy of the line scan camera based on the image.

2. The coating system according to claim 1, further comprising:
an acquisition card, electrically connected to the encoder, electrically connected to the one or plurality of line scan cameras, and configured to receive the first trigger signal from the encoder, transmit the first trigger signal to the one or plurality of line scan cameras, receive the image captured by the one or plurality of line scan cameras, and transmit the image to the controller.

3. The coating system according to claim 1 or 2, wherein:
the calibration ruler comprises: a plurality of first calibration blocks spaced apart from each other in a first row and a plurality of second calibration blocks spaced apart from each other in a second row, the plurality of first calibration blocks and the plurality of second calibration blocks being arranged in a staggered manner, and a first portion of each of the plurality of first calibration blocks and a second portion of each of the plurality of second calibration blocks being arranged on a same straight line;
the calibration ruler is attached to the first roller along a positioning line on the first roller, or attached to the second roller along a positioning line on the second roller, and the line scan camera photographs the calibration ruler upon being triggered by the second trigger signal to acquire a first image, and photographs the calibration ruler after receiving the first trigger signal to acquire a second image.

4. The coating system according to claim 3, wherein the calibration ruler further comprises: a third calibration block, located in a row different from the first row and the second row.

5. The coating system according to claim 4, wherein the third calibration block is aligned with one second calibration block of the plurality of second calibration blocks in a direction perpendicular to an extension direction of the second row.

6. The coating system according to any one of claims 3 to 5, wherein
the controller is configured to compute the lateral accuracy based on the first image in a case that the one or plurality of line scan cameras capture the first image upon being triggered by the second trigger signal, wherein the first image comprises the first portion and the second portion alternately arranged on the same straight line.

7. The coating system according to any one of claims 3 to 6, wherein
the controller is configured to compute the longitudinal accuracy based on the second image in a case that the one or plurality of line scan cameras capture the second image after receiving the first trigger signal, wherein the second image comprises the plurality of first calibration blocks and the plurality of second calibration blocks.

8. The coating system according to any one of claims 4 to 7, wherein:
the one or plurality of line scan cameras comprise a plurality of line scan cameras, wherein the plurality of line scan cameras are arranged side by side, imaging points of the plurality of line scan cameras are collinear, and an imaging field of view of each of the plurality of line scan cameras corresponds to a portion of the calibration ruler;
the controller is configured to determine overlapping fields of view of the plurality of line scan cameras in a case that each of the plurality of line scan cameras captures an image comprising the third calibration block.

9. The coating system according to claim 8, wherein:
each of the plurality of line scan cameras is configured to capture the first image upon being triggered by the trigger of the second trigger signal, such that the plurality of line scan cameras acquire a plurality of first images;
the controller is configured to remove overlapping portions of the plurality of first images based on the overlapping fields of view of the plurality of line scan cameras, stitch the plurality of first images from which the overlapping portions are removed into a third image, and compute the lateral accuracy based on the third image.

10. The coating system according to claim 6, wherein
the controller is configured to compute, based on a lateral length of a region between two adjacent edges in the first portion and the second portion alternately arranged on the same straight line and lateral pixel positions of the two adjacent edges, a lateral accuracy corresponding to the region between the two adjacent edges.

11. The coating system according to claim 8, wherein:
each of the plurality of line scan cameras is configured to capture the second image after receiving the first trigger signal, such that the plurality of line scan cameras acquire a plurality of second images;
the controller is configured to remove overlapping portions of the plurality of second images based on the overlapping fields of view of the plurality of line scan cameras, stitch the plurality of second images from which the overlapping portions are removed into a fourth image, and compute the longitudinal accuracy based on the fourth image.

12. The coating system according to claim 7, wherein
the controller is configured to compute, based on a longitudinal length of the first calibration block or the second calibration block between two edges in the first portion and the second portion alternately arranged on the same straight line, and a longitudinal pixel position of a lower edge and a longitudinal pixel position of an upper edge of the first calibration block or the second calibration block between the two edges, a longitudinal accuracy corresponding to a region between the two edges.

13. A calibration method for a coating system, wherein the coating system comprises: a first roller and a second roller; a calibration ruler, disposed on the first roller or the second roller and comprising a plurality of calibration blocks arranged in a staggered manner; an encoder, coaxially mounted with the first roller or the second roller, or mounted on a support and in contact with the first roller or the second roller by means of press-wheel mounting; one or a plurality of line scan cameras, disposed on one side of the first roller or the second roller, wherein an imaging field of view of the one or plurality of line scan cameras corresponds to the calibration ruler; and a controller;
the calibration method comprises:
generating, by the encoder, a first trigger signal when driven by the first roller or the second roller;
photographing, by the line scan camera, the calibration ruler to acquire an image after receiving the first trigger signal or upon being triggered by a second trigger signal generated inside the line scan camera; and
computing, by the controller, at least one of a lateral accuracy and a longitudinal accuracy of the line scan camera based on the image.

14. The calibration method according to claim 13, wherein:
the calibration ruler comprises: a plurality of first calibration blocks spaced apart from each other in a first row and a plurality of second calibration blocks spaced apart from each other in a second row, the plurality of first calibration blocks and the plurality of second calibration blocks being arranged in a staggered manner, and a first portion of each of the plurality of first calibration blocks and a second portion of each of the plurality of second calibration blocks being arranged on a same straight line;
the calibration ruler is attached to the first roller along a positioning line on the first roller, or attached to the second roller along a positioning line on the second roller;
photographing, by the line scan camera, the calibration ruler to acquire the image after receiving the first trigger signal or upon being triggered by the second trigger signal generated inside the line scan camera, comprises: photographing, by the line scan camera, the calibration ruler to acquire a first image upon being triggered by the second trigger signal;
computing, by the controller, at least one of the lateral accuracy and the longitudinal accuracy of the line scan camera based on the image, comprises: computing, by the controller, the lateral accuracy based on the first image in a case that the one or plurality of line scan cameras capture the first image upon being triggered by the second trigger signal, wherein the first image comprises the first portion and the second portion alternately arranged on the same straight line.

15. The calibration method according to claim 14, wherein:
photographing, by the line scan camera, the calibration ruler to acquire the image after receiving the first trigger signal or upon being triggered by the second trigger signal generated inside the line scan camera, comprises: photographing, by the line scan camera, the calibration ruler to acquire a second image after receiving the first trigger signal;
computing, by the controller, at least one of the lateral accuracy and the longitudinal accuracy of the line scan camera based on the image, comprises: computing, by the controller, the longitudinal accuracy based on the second image in a case that the one or plurality of line scan cameras capture the second image after receiving the first trigger signal, wherein the second image comprises the plurality of first calibration blocks and the plurality of second calibration blocks.

16. The calibration method according to any one of claims 14 and 15, wherein:
the calibration ruler further comprises: a third calibration block located in a row different from the first row and the second row;
the one or plurality of line scan cameras comprise a plurality of line scan cameras, wherein the plurality of line scan cameras are arranged side by side, imaging points of the plurality of line scan cameras are collinear, and an imaging field of view of each of the plurality of line scan cameras corresponds to a portion of the calibration ruler;
the calibration method further comprises:
determining, by the controller, overlapping fields of view of the plurality of line scan cameras in a case that each of the plurality of line scan cameras captures an image comprising the third calibration block.

17. The calibration method according to any one of claims 14 to 16, wherein:
photographing, by the line scan camera, the calibration ruler to acquire the first image upon being triggered by the second trigger signal, comprises: capturing, by each of the plurality of line scan cameras, the first image upon being triggered by the second trigger signal, such that the plurality of line scan cameras acquire a plurality of first images;
computing, by the controller, the lateral accuracy based on the first image in the case that the one or plurality of line scan cameras capture the first image upon being triggered by the second trigger signal, comprises: removing, by the controller, overlapping portions of the plurality of first images based on the overlapping fields of view of the plurality of line scan cameras, stitching the plurality of first images from which the overlapping portions are removed into a third image, and computing the lateral accuracy based on the third image.

18. The calibration method according to claim 17, wherein computing, by the controller, the lateral accuracy based on the third image comprises:
computing, by the controller, based on a lateral length of a region between two adjacent edges in the first portion and the second portion alternately arranged on the same straight line and lateral pixel positions of the two adjacent edges, a lateral accuracy corresponding to the region between the two adjacent edges.

19. The calibration method according to any one of claims 15 to 18, wherein:
photographing, by the line scan camera, the calibration ruler to acquire the second image after receiving the first trigger signal, comprises: capturing, by each of the plurality of line scan cameras, the second image after receiving the first trigger signal, such that the plurality of line scan cameras acquire a plurality of second images;
computing, by the controller, the longitudinal accuracy based on the second image in the case that the one or plurality of line scan cameras capture the second image after receiving the first trigger signal, comprises: removing, by the controller, overlapping portions of the plurality of second images based on the overlapping fields of view of the plurality of line scan cameras, stitching the plurality of second images from which the overlapping portions are removed into a fourth image, and computing the longitudinal accuracy based on the fourth image.

20. The calibration method according to claim 19, wherein computing, by the controller, the longitudinal accuracy based on the fourth image comprises:
computing, by the controller, based on a longitudinal length of the first calibration block or the second calibration block between two edges in the first portion and the second portion alternately arranged on the same straight line, and a longitudinal pixel position of a lower edge and a longitudinal pixel position of an upper edge of the first calibration block or the second calibration block between the two edges, a longitudinal accuracy corresponding to a region between the two edges.
